Europäisches Patentamt

European Patent Office

Office européen des brevets

(19)

(11) **EP 1 189 202 A1**

(12) **EUROPEAN PATENT APPLICATION**

(43) Date of publication:
**20.03.2002 Bulletin 2002/12**

(51) Int Cl.⁷: **G10L 15/02**

(21) Application number: **00120394.2**

(22) Date of filing: **18.09.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Sony International (Europe) GmbH 10785 Berlin (DE)**

(72) Inventors:
 • **Marasek, Krzysztof,
  Advanced Technology Center
  Hedelfinger Strasse 61, 70327 Stuttgart (DE)**
 • **Goronzy, Silke, Advanced Technology Center
  Hedelfinger Strasse 61, 70327 Stuttgart (DE)**

• **Kompe, Ralf, Advanced Technology Center
 Hedelfinger Strasse 61, 70327 Stuttgart (DE)**

(74) Representative: **Müller . Hoffmann & Partner
 Patentanwälte
 Innere Wiener Strasse 17
 81667 München (DE)**

Remarks:
A request for correction of the word "genrated" into "generated" and of the word "reliablility" into "reliability" has been filed pursuant to Rule 88 EPC. A decision on the request will be taken during the proceedings before the Examining Division (Guidelines for Examination in the EPO, A-V, 3.).

(54) **Duration models for speech recognition**

(57)     A method for recognizing speech is proposed, wherein for a received utterance (U) a recognition result (W) and a confidence measure (CM) are generated. For a particular thorough description of the reliablility of the genrated recognition result (W) the confidence measure (CM) is based on a combination of a plurality of features (f_j) derived from the recognition process and/or the recognition result (W).

Fig. 1

EP 1 189 202 A1

**Description**

The present invention relates to a method for recognizing speech according to the preamble of claim 1 and more particular to a method for recognizing speech wherein several features are employed and combined for determining a confidence measure.

Recently, automatic speech recognition (ASR) has become more and more important because in many technical and commercial activities methods and devices for automatic speech recognition have been used to realize interfaces between a human user and the technical equipment so as to reduce the burden of direct personal assistance and support or to simplify the usage and application of the equipment, for instance.

Methods and devices for automatic speech recognition in the prior art utilize in general at least three stages of processing.

First of all in an input stage a speech phrase is received as an analog acoustical input signal. Then the human speech input is converted into an electrical equivalent which is representative for said human speech input signal. From a pre-processed representing signal of the electrical equivalent distinct features are derived. These features may be built up as so called speech elements which are also called hypothesis speech elements and which are chosen out of a given set of possible speech elements. These speech elements may be phones, phonemes, syllables, words, and/ or sequences thereof. Based on the sequence of speech elements, state-of-the-art methods for recognizing speech then generate a sequence of words which is most probably representative for the received input speech phrase.

As common speech recognizing methods and systems are still far from being perfect, the so called confidence measures (CM) have been introduced so as to increase the reliability of these methods and in particular to provide the user and applicant of such systems and methods with a measure which describes the reliability and/or the probability that the found and recognized sequence of words is correct. The confidence measures therefore judge the reliability of the recognized phrase.

If the recognized result is considered as being unreliable - meaning that the probability that it was recognized is low - then it is rejected in accordance with the confidence measure of the recognized word or utterance. In contrast, if the probability that the distinct word or utterance has been recognized correctly is high, it is accepted and the further processing goes on as usual.

An essential observation within the concept of CM is that a misrecognition causes a false labeling of speech elements or phones in the output of the recognizing process. This is in particular true when the normally expected duration distribution is distorted by distinct properties of the pronunciation of the actual speaker.

Especially when the vocabulary is very large in an isolated word recognition system, the probability that words are confusable increases. This observation makes it difficult to recognize words or utterances correctly. In particular in continuous speech recognition systems, the same problem arises. In the case of huge vocabulary it is even worse.

During the past years it has become necessary to equip known speech recognition systems with the ability to understand spontaneous speech, for example in automatic telephone services, time schedule information services, or the like. In these systems, it is still a problem that the utterances of the speakers may be unpredictable. Although equipping prior art recognition systems with the ability of understanding spontaneous speech provides a user-friendly user-interface, the problem in connection with the handling of out of vocabulary words (OOV), influencies and acoustical mismatches increase. Additionally, the customers and applicants of said technology are unaware of these technological limitations. Therefore, the users expect the system to work properly, even if their response includes these disfluencies, hesitations, false starts, and intermittent sounds like hm's and ah's, or the like.

All these factors and influences lead to an increased error rate. As a consequence, the customers and users of such systems and methods for recognizing speech are not satisfied with the quality of the recognition result.

In order to make the output of the recognizing process more believable and more reliable, the so called confidence measures (CM) have been introduced and used. These CMs use additional and/or external knowledge which is developed before/during the recognition process per se.

Different kinds of confidence measures for the judgment of recognized speech have been developed. they all have in common that they are based on feature which is extracted from the recognition process.

A major drawback of all these known methods for generating confidence measures is that they are hard to implement in real time automatic speech recognition systems and that they imply a large burden of computer resources and computation time. Additionally, they give only a limited measure for the reliablility of a recognition result.

It is an object of the present invention to provide a method for recognizing speech which provides a robust and particular reliable measure to classify the recognition quality.

This object is achieved by the inventive method for recognizing speech according to the wording of claim 1. Preferred embodiments of the inventive method are within the scope of the dependent subclaims.

In prior art methods for recognizing speech a received utterance/speech phrase U is subjected to a recognition process so as to generate a recognized utterance W as a recognition result and at least one confidence measure CM is generated for said recognized utterance W or for parts thereof being a measure for the reliability of the recognition result W.

The method for recognizing speech according to the invention is characterized in that a set F of a plurality of features $f_j$ is derived from the recognition process and/or from said recognition result W with respect to said received utterance U. Furter generating said confidence measure CM is based on a combination of a plurality of features $f_j$ chosen from said set F of features $f_j$.

It is therefor a basic idea of the invention to use a plurality, multiplicity and/ or combination of features $f_j$ to derive a confidence measure CM for therecognition result W. As each of said evaluated features $f_j$ contains certain information a more thorough estimate on the reliability of the recognition result is given by the so constructed confidence measure CM, in contrast to prior art methods which use single features instead of a combination.

According to a preferred embodiment of the invention the features $f_j$ chosen for the construction of a confidence measure CM may be related to a duration or duration measure, in particular of certain speech elements contained in the utterance U, W.

Each of said duration related features may in each case have one of the following possible forms:

- 1) a number n_toolongX of durations di of speech elements in a recognized utterance W being longer than a X-percentile $\eta_X$ compared to a set of training data, i.e.:

$$\text{n\_toolongX} := \left\| \bigwedge_{d_i \in W} d_i \geq F(\eta_X) \right\| \qquad (1)$$

where F is a known distribution,

- 2) a normalized number n_toolongX_norm of durations $d_i$ of speech elements in a recognized utterance W being longer than a X-percentile $\eta_X$ compared to a set of training data, where all duration $d_i$ are normalized by a speaking rate $\alpha$, i.e.:

$$\text{n\_toolongX\_norm} := \left\| \bigwedge_{d_i \in W} d_i/\alpha \geq F_\alpha(\eta_X) \right\| \qquad (2)$$

- 3) a number n_tooshort X of durations $d_i$ of speech elements in a recognized utterance W being shorter than a X-percentile $\eta_X$ compared to a set of training data, i.e.:

$$\text{n\_tooshortX} := \left\| \bigwedge_{d_i \in W} d_i < F(\eta_X) \right\| \qquad (3)$$

where F is a known distribution,

- 4) a normalized number n_tooshortX_norm of durations di of speech elements in a recognized utterance W being shorter than a X-percentile $\eta_X$ compared to a set of training data being normalized by a speaking rate tempo or $\alpha$, i.e.

$$\text{n\_tooshortX\_norm} := \left\| \bigwedge_{d_i \in W} d_i/\alpha < F_\alpha(\eta_X) \right\| \qquad (4)$$

- 5) a number sequence_long or sequence_short of too long or too short speech elements in said utterance U, W followed by too shortor too long speech elements in said utterance U, W, respectively,

- 6) an average speaking rate $\alpha_{avg}$ or avg_temp being in particular evaluated only on utterances U, W with high confidence,

- 7) an standard deviation stdev_tempo of the speaking rate $\alpha$, in particular with respect to said average speaking

rate $\alpha_{avg}$ or avg_temp for a given number N of last utterances U, W,

- 8) an absolute difference diff_tempo between said average speeking rate $\alpha_{avg}$ or avg_temp and said current speaking rate $\alpha$, i.e.:

$$\text{diff\_tempo} := \alpha_{avg} - \alpha, \qquad (8)$$

- 9) a current speaking rate tempo or $\alpha$, or the like.

With respect to the above mentioned features 1) to 9) it has to be mentioned that other normalization methods are possible apart from $d_i/\alpha$.

It is advantageous in accordance to a further embodiment of the invention to employ alternatively or additionally one or more additional and/or non-duration related features $f_j$ in said combination of features $f_j$ for generating said confidence measure CM.

Each of said additional or non-duration related features may in each case be chosen from one of the following possible forms:

- 10) a feature direction feature_direction which is defined to be 1 if a best word, speech element or the like is found in a forward beam and which is defined to be 0 if it is found in a backward beam,

- 11) a total number T of frames or n_frames being contained in the untterance U, W,

- 12) a total number P or n_phones of phones, speech elements or the like being contained in the untterance U, W,

- 13) a total number $T_{nosil}$, n_frames_nosil of frames being contained in the utterance U, W without silence,

- 14) an acoustic score first_score for a first-best hypothesis $W_1$, i.e.:

$$\text{first\_score} := p(W_1|A) = \sum_{t=1}^{T} b(o_t)\, a_{ij} \qquad (14)$$

- 15) a difference first_second in acoustic scores first_score and second_score between first- and second-best hypotheses $W_1$ and $W_2$, respectively, i.e.:

$$\text{first\_second} := p(W_1|A) - p(W_2|A), \qquad (15)$$

- 16) a normalized difference first_second_l in acoustic scores first_score and second_score between first- and second-best hypotheses $W_1$ and $W_2$, respectively, being normalized by the number T of frames being contained in said utterance U, W, i.e.:

$$\text{first\_second\_l} := \text{first\_second} / T, \qquad (16)$$

- 17) a normalized difference first_second_f in acoustic scores first_score and second_score) between first- and second-best hypotheses $W_1$ and $W_2$, respectively, being normalized by an acoustic score first_score for a first-best hypothesis $W_1$, i.e.:

$$\text{first\_second\_f} := \text{first\_second} / \text{first\_score}, \qquad (17)$$

- 18) an average acoustic score avg for N-best hypotheses $W_1, \dots, W_N$, i.e.:

$$avg \ := \ 1/N \sum_{i=1}^{N} p_i(W_i \,|\, A) \qquad\qquad (18)$$

- 19) an normalized average acoustic score avg_l for N-best hypotheses $W_1, \ldots, W_N$ being normalized by a number T of frames T being conteined in said utterance U, W, i.e.:

$$avg\_l := avg / T \qquad\qquad (19)$$

- 20) an normalized average acoustic score avg_f for N-best hypotheses $W_1, \ldots, W_N$ being normalized by an acoustic score first_score for the first-best hypothesis $W_1$, i.e.:

$$avg\_f := avg / first\_score , \qquad\qquad (20)$$

- 21) a difference first_avg between an acoustic score first_score for a first-best hypothesis $W_1$ and an average acosutic score avg, i.e.:

$$first\_avg := p(W_1 \,|\, A) \ - \ 1/N \sum_{i=1}^{N} p_i(W_i \,|\, A) \qquad\qquad (21)$$

- 22) a normalized difference first_avg_l between an acoustic score first_score for a first-best hypothesis $W_1$ and an average acosutic score avg being normalized by a number T of frames T being contained in said utterance U, W, i.e.:

$$first\_avg\_l := first\_avg / T , \qquad\qquad (22)$$

- 23) a normalized difference first_avg_f between an acoustic score first_score for a first-best hypothesis $W_1$ and an average acosutic score avg being normalized by said acoustic score first_score for said first-best hypothesis $W_1$, i.e.:

$$first\_avg\_f := first\_avg / first\_score , \qquad\qquad (23)$$

- 24) a difference first_last between acoustic scores first_score and last_score for a first-best hypothesis $W_1$ and for a last-best hypothesis $W_N$, respectively, i.e.:

$$first\_last := first\_score - last\_score = p(W_1|A) - p(W_N|A), \qquad\qquad (24)$$

- 25) a normalized difference first_last_l between acoustic scores first_score and last_score for a first-best hypothesis $W_1$ and for a last-best hypothesis $W_N$, respectively, being normalized by a number T of frames being contained in said utterance U, W, i.e.:

$$first\_last\_l := first\_last / T , \qquad\qquad (25)$$

- 26) a normalized difference first_last_f between acoustic scores first_score and last_score for a first-best hypothesis $W_1$ and for a last-best hypothesis $W_N$ being normalized by said acoustic score first_score for said first-best hypothesis $W_1$, i.e.:

$$first\_last\_f := first\_last / first\_score , \tag{26}$$

- 27) a normalized score difference first_beambest for all frames being contained in said utterance U, W being normalized by the number $T_{nosil}$ of frames being contained in said utterance U, W without silence, i.e.:

$$first\_beambest := 1/T_{nosil} \sum_{t=1}^{T} \left( [\min_{s_t \in beam} b_{s_t}(o_t)] - [b(o_{OSS_t})] \right) \tag{27}$$

where $o_t$ in each case is a features vector for the $t^{th}$ frame in the utterance U, W with t running from 1 to T, b in each case is a Gaussian probability density function pbdf and $o_{OSSt}$ denotes a feature vector for the $t^{th}$ frame in the utterance U, W found for the a state belonging to an optimal state sequence OSS,

- 28) a number first_beambest_zeros of frames being contained in said utterance U, W for which a score difference

$$[\min_{s_t \in beam} b_{s_t}(o_t)] - [b(o_{OSS_t})] = 0 \tag{28}$$

is zero,

- 29) a largest continuous difference first_beambest_largest in said normalized score difference first_beambest,

- 30) a best possible score in a beam, i.e.:

$$best := \sum_{t=1}^{T} \min_{s_t \in beam} b_{s_t}(o_t) \tag{30}$$

- 31) a score difference first_best for all frames being contained in said utterance U, W taking into account respective transition probabilities $a_{ij}$, i.e.:

$$first\_best := \sum_{t=1}^{T} \left( [\min_{s_t \in beam} b_{s_t}(o_t)a_{i,s_t}] - [b(o_{OSS_t})a_{i,OSS_t}] \right) \tag{31}$$

where $o_t$ in each case is a features vector for the $t^{th}$ frame in the utterance U, W with t running from 1 to T, b in each case is a Gaussian probability density function pbdf, $o_{osst}$ denotes a feature vector for the $t^{th}$ frame in the utterance U, W found for the a state belonging to an optimal state sequence OSS and i, j denoting optimal predecessor states,

- 32) a worst phone score worst_phonescore in the first-best hypothesis $W_1$ except for silence, i.e.:

$$worst\_phonescore := \tag{32}$$

- 33) a normalized worst phone score worst_phonescore_b in the first-best hypothesis $W_1$ except for silence being normalized by a best possible phone score $p_{best}$ in a beam, i.e.:

$$worst\_phonescore\_b := worst\_phonescore / p_{best}, \tag{33}$$

where

$$p_{best} := \qquad (33a)$$

- 34) an average phone score(avg_phonescore in the best hypothesis, except for silence, i.e.:

$$avg\_phonescore := \qquad (34)$$

- 35) a change stdev_phonescore of a score within one phone, i.e.:

$$stdev\_phonescore := \qquad (35)$$

- 36) a difference worst_phone_best between a best possible phone score $p_{best}$ and a worst phone score worst_phonescore for a best hypothesis, i.e.:

$$worst\_phone\_best := p_{best} - worst\_phonescore \qquad (36)$$

- 37) a worst frame score worst_frame_score for all frames in a best hypothesis $W_1$, i.e.:

$$worst\_frame\_score := \qquad (37)$$

- 38) a normalized worst frame score worst_frame_score_b for all frames in a best hypothesis $W_1$ being normalized by a best possible frome score $p_{t,best}$ in a beam, i.e.:

$$worst\_frame\_score\_b := worst\_frame\_score / p_{t,best}, \qquad (38)$$

where

$$p_{t,best} := \qquad (38a)$$

- 39) a sum best_in_beam of the differences between best frame scores for the hypotheses in the beam and for the best hypothesis, i.e.:

$$best\_in\_beam := \qquad (39)$$

- 40) a normalized sum best_in_beam_I of the differences between best frame scores for the hypotheses in the beam and for the best hypothesis being normalized by a number T of frames being contained in said utterance U, W, i.e.:

$$best\_in\_beam\_I := best\_in\_beam / T \qquad (40)$$

- 41) an average acoustic score avg_framescore for all frames in a best hypothesis, except for silence, i.e.:

$$avg\_framescore := \qquad (41)$$

- 42) a signal-to-noise ratio snr, particularly computed on $C_0$,

or the like.

With respect to the features 10) - 42) and in particular with respect to 33) - 39) typically scores are used where the better score is indicated by a smaller score; the contrary is of course possible as well.

For the process of selecting distinct features to build a feature combination at least one classifier or the like is employed. Besides the large variety of possible classification schemes to select possible feature combinations neural network based classifiers may be preferrably employed.

It is also advantageous when the classifier combines duration related features and/or non-duration related features are combined. That means, duration related features may be combined with other duration related features as well as with non-duration related features and vice versa.

The combination of features $f_i$, which partly contains even redundant information (encoded differently) strongly increases the performance of the CM.

According to a further preferred embodiment the inventive method for recognizing speech further comprises the steps of receiving a speech phrase, generating a representing signal which is representative for said speech phrase, determining from said representing signal at least a first sequence of speech elements - in particular out of a given set of possible speech elements - generating for each speech element and/or for sub-sets/sub-sequences of speech elements a duration measure. Furthermore, according to the inventive method, at least a first sequence of words which is most probably corresponding to said speech phrase is generated from said speech elements and/or output. The inventive method also includes the step of generating and/or outputting a confidence measure which is at least based on said duration measures and which is representative for the probability of a correct recognition of the speech elements, said sequence of words and/or therefore of the received speech phrase. In accordance with the inventive method each of said duration measures comprises information at least on whether or not said elements and/or said subsets/sub-sequences of speech elements within said representing signal are compatible to a given and pre-defined duration model.

It is therefore essential to first receive a speech phrase as an analog acoustical input signal which is then transformed within a pre-processing step to a representing signal. This pre-processing step may comprise the step of filtering, digitizing, and/or Fourier transforming or the like. The representing signal is the basis for the further steps of processing.

Thereafter, based on the representing signal, at least a first sequence of speech elements is generated. It is also possible to generate a variety or a set of candidates for sequences of speech elements. The speech elements are chosen from a given set of possible speech elements. Each speech element may be a phone, a phoneme or acoustical fragment, a syllable, a word, and/or a sequence and combination thereof.

According to the inventive method, for each speech element and/or for subsets/sub-sequences of speech elements within said representing signal, a respective duration measure is generated. The duration measures are descriptive for the duration of the respective speech element and/or sub-sets/sub-sequences of speech elements and in particular they may be representative for the fact on whether or not the respective duration is compatible to a given and pre-defined duration model, i. e. a model for the length or duration of their respective pronunciation and/or occurence.

A duration measure may be a single value out of a set of discrete - in particular binary - values or out of a set of continuous values. It may also be built up in a more complex way, for example as a vector.

It is further essential to generate and/or to output at least a first sequence of words which is most probably representative for said speech phrase. Of course, a variety or a set of candidates of sequences of words, in particular with differing probabilities, may be generated.

For each generated sequence of words being correspondent to said speech phrase, a confidence measure is generated and/or output. Said confidence measure is representative for the probability that the speech elements, the sequence of words and/or the speech phrase has been recognized correctly, and therefore that the candidate word sequence is the correct one. The confidence measure according to the inventive method is at least based on said duration measures for the speech elements and/or for said sub-sets/sub-sequences of speech elements.

According to the present invention the method preferably uses phones, phonemes, syllables, words, or the like, and/or sequences thereof as speech elements. Of course, phones or phonemes are the most elementary acoustical or speech fragments. They are followed in complexity by the so called syllables. The next step in complexity are the words and the combinations of words. Dependent on the complexity of the language model it is possible to assign to each of these realizations of speech elements the aforementioned duration measures or duration values. Generally, the duration of a word or of a syllable is as long as the sum of the durations of the constituting phones or phonemes.

In a preferred embodiment of the inventive method for recognizing speech prior to the recognition process, the duration model is constructed by recognizing given and pre-defined speech phrases as training data. During that particular training or learning phase known and pre-defined speech phrases are fed into the processing stage of the inventive method, with the method trying and/or forcing to recognize the correct transcription of the provided test phrases.

It is of particular advantage that prior to recognition the statistical distribution of the duration for each of said possible speech elements and/or sequences thereof is determined and/or analyzed and that said analysis is then included as a composing part into said duration model. It is an advantage for speaker dependent or speaker adapted systems that based upon naturally spoken speech the actual durations including the speaker's specific pronunciations can be involved into said duration model.

During the determination of the statistical distribution of the durations the method is provided with training data as an input speech signal together with a distinct correct transcription assigned to said input speech signal. The recognizing process is then forced to recognize the correct transcription. Therefore, as a training particular text including even complicated pronunciations are pre-determined and the specific pronunciation of that particular text is input to the processing stages of the inventive method.

In a further preferred embodiment of the inventive method during the determination of the statistical distribution of the durations the boundaries of the correct speech elements corresponding to the training data are determined within said training data. Then the boundaries of the speech elements are used to estimate the durations of respective speech elements.

Furthermore, during the determination of said duration measures, statistical parameters for the distinct speech elements and/or for said sub-sets/subsequences of speech elements with respect to their duration distribution are calculated and/or are employed.

As mentioned above, the duration measures are representative for the compatibility of the durations of the speech elements and/or of said sub-sets/subsequences of speech elements with respect to the distinct duration model. Therefore, the distinct duration measures have to measure that particular compatibility in one sense or another.

According to a distinct embodiment of the inventive method the duration measures are set to a first predetermined value, if - and only if - the duration of the particular speech element and/or of the sub-set/sub-sequence of speech elements is compatible with a certain duration model and in particular is contained in a given and pre-defined percentile interval of the respective duration distribution. If the respective speech element and/or the sub-set/subsequence of speech elements is not compatible with said duration model and in particular is not contained in that particular percentile or confidence interval of the duration distribution, the particular duration measure is set to a second predefined value. The duration measures and therefore said first and second predetermined values may be discrete values and even binary high and low values such as 1 or 0. They may also fall into a range of continuous values representing the duration time itself - for example as a measurement value - or a probability measure.

For instance, the duration measure may be a binary signal having the value 1, if the particular duration is within the boundaries of the percentile interval and having the value 0, if it is below the lower percentile interval boundary or above the upper percentile interval boundary.

The inventive method for recognizing speech may use the following - in particular statistical - parameters at least when describing the properties of duration of the speech elements, namely the percentiles and/or intervals of percentiles of speech element durations, the number of speech elements in a word, sequence of words, or any section of an utterance, the number and/or duration of speech elements and/or sequences thereof being too short and/or too long with respect to the distinct duration model, absolute durations of speech elements as well as durations of speech elements normalized with respect to the speech rate or speaking rate, probabilities and other statistical entities of speech element durations. The probabilities of speech element durations and/or of sub-sets/sub-sequences of speech elements within said received speech phrase may follow from appropriate Gauss or Gamma statistical distributions, or they may be estimated from distinct histograms being created during the learning or training phase. Furthermore, statistical variances of the duration distribution within a given utterance may be employed. Also average duration differences in a sequence of speech elements may be evaluated.

According to a particular advantageous embodiment of the inventive method during the determination of the duration of the speech elements and/or of the sub-sets/sub-sequences of speech elements, the determined durations are corrected and/or normalized with respect to a speaking rate of the received speech phrase. This normalization and/or correction with respect to the speaking rate or speaking rate may be carried out locally, so that hesitations and de- and accelerations of the speaking person during a single utterance can be canceled out to improve the reliability of the recognized sequence of words representing the received speech phrase.

According to another preferred embodiment of the inventive method, each of said speech elements and/or each of said sub-sets/sub-sequences of speech elements may be classified as being rejected, if their respective duration measure indicates a lack of compatibility with the duration model. Therefore, even if the recognizing process detects for a section of the received speech phrase one or several speech elements which are compatible with respect to other properties of an acoustic model - for example with respect to the time dependent frequency spectrum - based on a duration compatibility check one or another candidate for the speech elements may be rejected as they do not fit to the acoustic or language model with respect to their duration distribution.

Therefore, according to a further preferred embodiment of the inventive method for recognizing speech, said sequence of words being representative for said speech phrase may be classified as being rejected at all, if said confidence measure of the sequence of words indicates that the number of speech elements and/or of said sub-sets/ sub-sequences of speech elements being not compatible with respect to their duration model exceeds a given threshold number. That means that, if the number of rejected speech elements is too large, the detected sequence of words probably corresponding to said received speech phrase has to be rejected in its entirety.

If the recognizing process detected several candidates of sequences of hypothesis speech elements and/or of words corresponding to said received speech phrase, the best match can be singled out as the candidate having the less number of rejections with respect to the underlying duration model.

In the following, some aspects of the inventive method for recognizing speech are further elucidated.

In many applications of speech recognition, the problem of mis-recognition by far exceeds the problem of rejecting certain candidates for word sequences or utterances. In the case of a rejection, the rejected candidate for the sequence of words can be exchanged by another candidate for the sequence of words or it can be followed by a re-prompt so that the speaker has to repeat his utterance to be recognized. Also the use of confidence measures can be highly useful for the so called unsupervised speaker adaptation schemes.

The computation of confidence measures and therefore the duration compatibility check can be carried out by using two distinct strategies, namely the one-pass strategy or the two-pass strategy.

In the two-pass recognition/verification or post-processing scheme or strategy, a confidence measure for the hypothesized word sequence or utterance is computed in a post-processing step which follows the recognizing stage, i. e. when a certain candidate for the word sequence or utterance has been found. This has the particular disadvantage that the post-processing stage has to rely on a probably error prone segmentation of the recognizing stage.

In contrast, in the one-pass strategy, the decoding criterion itself is modified and the duration compatibility check is carried out during recognition, such that the decoded string or candidate for the word sequence is - as mentioned above - that particular one which obtains the highest confidence score with respect to all possible sequences of speech elements, word sequences, strings, or the like. The test in that case is not applied to a single string, but to all possible candidate strings.

The two strategies may involve threshold comparison tests, rule based systems and/or statistical classificators and the latter of which may employ decision trees, neural networks, nearest neighbour classificators or the like.

Additionally, a special training can be applied to the method to maximize the ability of discrimination between the models.

The parameters for the confidence measures in accordance with the inventive method may include the statistical means, the variances, the root mean square, and distinct percentiles or percentile intervals. During that particular percentiles, the 0.01, 0.1, 1, 5, 50 - the median of the probe - 95, 99, and 99.9 percentiles of the elements or phones length or duration distribution may be employed. The percentile k - in particular for k = 0.1, ..., 99.9 - for a given statistical distribution $F(x)$ is defined as a value $\eta_k$ which satisfies the relation $F(\eta_k) = 0.01\ k$.

During the recognition phase, the time-alignment is carried out for each recognized word, word sequence, or utterance fragment. The durations of the recognized speech elements or phones determined on this time-alignment are compared with previously calculated statistics. In the case of a significant deviation - i. e. in the case where the measured value exceeds a chosen percentile or is outside a given percentile interval where the percentiles are chosen in dependence on the postulated rejection level - these are then marked as being rejected or erroneous.

By using different percentiles, the rejection level can be adjusted. If a smaller percentile is chosen for marking erroneous phones or erroneous speech elements, more phones or elements are marked, thus increasing the rejection rate. On the other hand, if a larger percentile is used, more speech elements or phones will be accepted by the method and thus the rejection rate will be lower. Depending on the speaking rate or speaking rate, the durations of the phones or speech elements may vary and therefore influence the confidence measure. To cancel out these effects, the durations of the recognized speech elements or phones may be corrected and/or normalized with respect to the speaking rate or speaking rate.

A simple speaking rate approximation which can be used to cancel out the effect of speaking rate may be defined by the relation

$$\alpha = \frac{1}{N} \sum_{i=1}^{N} \frac{d_i}{\bar{x}_p},$$

where N denotes the number of speech elements or phones within the observed utterance and/or in the past few utterances, $d_i$ is the duration of the ith speech element or phone segment - recognized as phone p - in the utterance and $\bar{x}_p$ is the mean length of the corresponding phone p learned during the training.

If the number of erroneous segments or speech elements exceeds a predetermined threshold, the utterance is rejected. That means for an isolated word recognizer that, if in the recognized word or utterance there are too many speech elements or phones which are of false length or duration, the word or utterance will be rejected. Additionally, the sequence of significantly too long or too short segments or speech elements are searched and the number is taken into account by formulation of an CM-hypothesis. For this purpose, the standardized values z of durations x are used.

$$z = \frac{x - \bar{x}}{s}$$

where $\bar{x}$ is the population mean of the duration of a given speech element or phone and s is its standard deviation.

As shown above, the following quantities are used to describe the duration of the speech elements of phones: percentiles or phone durations - all percentiles can be used simultaneously or individually - the number of phones in a word, the number and the duration of too short/too long sequences of speech elements or phones, the absolute durations of speech elements or phones as well as the duration of speech elements or phones normalized and corrected for the speaking rate, the probabilities of phone durations following from appropriate Gauss or Gamma statistical distributions or being estimated from histograms learned during the training phase, statistical variances of the duration distribution in the utterance, and averaged duration differences in the sequences of speech elements or phones.

The features of the new and inventive method with respect to the confidence measures may be combined with traditional confidence measures.

As a result of the new and inventive method for recognizing speech, traditional applications of confidence measures will be refined by incorporating the speech element or phone duration matching.

In the presented approach, the speech element or phone can be a phoneme as used in the pronunciation lexika or a context-dependent phone symbol or a state of a Hidden Markov Model (HMM-state). The context of the speech element or phone is here understood as a dependence on the neighborhood elements or phones, the position in a word or sequences of words, the type of word - i. e. function word, verb, ... - all the positions in a sentence or in an utterance.

The inventive method for recognizing speech will be explained by means of a schematical drawing on the basis of preferred embodiments of the inventive method, in which

**Fig. 1**    shows a block diagram which represents a preferred embodiment of the inventive method for recognizing speech,

**Fig. 2**    is a block diagram which elucidates some details of the data processing of an embodiment of the invention, and

**Fig. 3**    demonstrates the result of intermediate steps of the recognition process according to an embodiment of the invention.

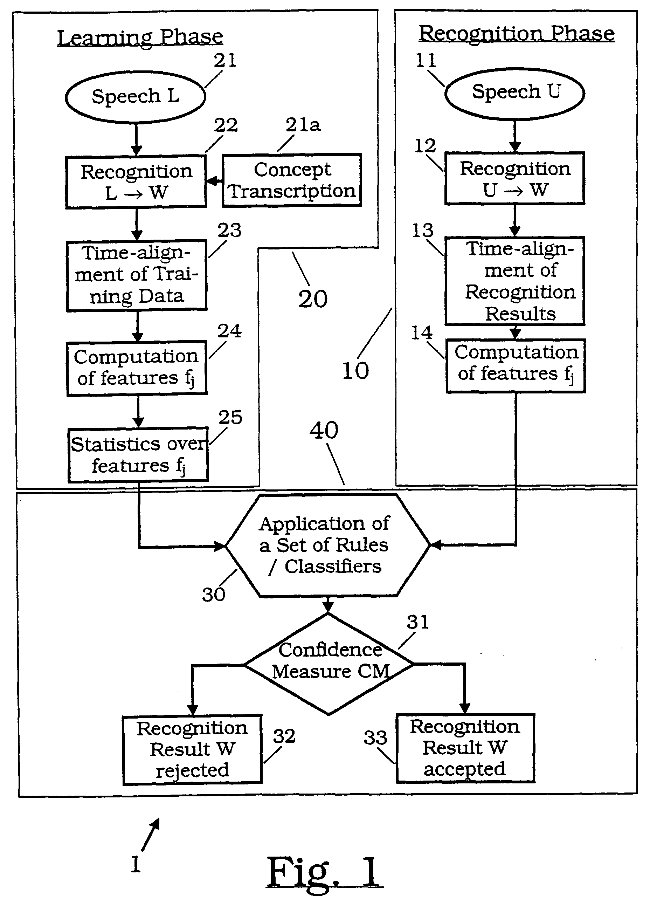

The block diagram of Fig. 1 demonstrates different steps of an embodiment of the inventive method 1 for recognizing speech. Prior to the recognition phase 10 a learning or training phase 20 may be carried out by the inventive method 1 for recognizing speech. During the learning and training phase 20 in steps 21 and 21a the given and received learning speech phrase L and the respective correct transcription of the given speech phrase L are input to the recognizing process 22. After the step of recognition 22 the data of the correct transcription are assigned to the given speech phrase by time-alignment of the training data in step 23. In step 24 features $f_j$ are derived or computed from the recognition process/result. In step 25 of the learning phase 20 from the time-alignment 23 of the training data statistics and the statistic evaluation over the lengths or durations of the distinct speech elements or phones are extracted as well as statistics over the computed features $f_j$. The result of the statistics and the statistical evaluation are fed to a comparison module 40.

After training within the training or learning phase 20, the inventive method 1 may carry out a recognition phase 10. First of all in step 11 of the recognition phase 10, a unknown speech phrase U is received in step 11 and then input into the recognition stage 12. After recognizing the input speech phrase U, the durations or lengths of the recognized result may be extracted in step 13 of the recognition phase 12, again e.g. by a time-alignment process 13 of the speech elements or phones within the recognition result. In step 14 of the recognition phase 10 again features $f_j$ are derived or computed from the recognition process/result. The result of the extraction of phone durations and/or the computed features are then fed into the comparison module 40.

Comparison module 40 selects in a first step 30 distinct features fj for the construction of a confidence measure to follow by applying a set a rules and/ or classifiers. In the following step 31 based on the selected features a confidence measure CM is derived so as to classify the recognition result W as being rejected in step 32 or as being accepted in step 33.

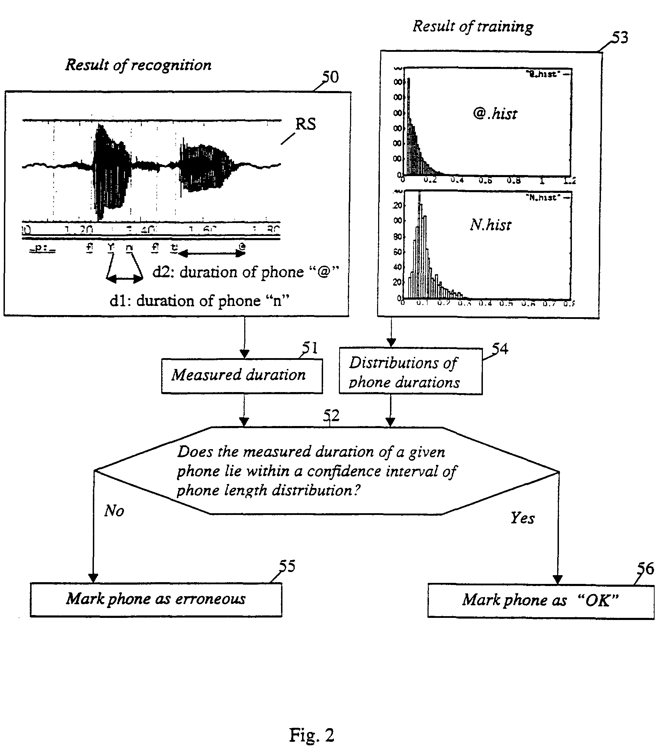

In the block diagram of Fig. 2 details of a comparison and evaluation proces of an embodiment of of the invention are described.

As a result of the training or learning phase 20 for each possible speech element or phone, the frequencies of the durations of the distinct phones are collected in step 53. From the collection of the frequencies of the durations of the distinct phones, statistical distributions of the phone durations and other statistical data are extracted in step 54 and then fed into the comparison section of step 52.

In step 52 the theoretical statistical distributions and other statistical data of step 54 are compared with the actual measured durations. It is checked on whether or not the measured durations for the given phone or speech element lays within a confidence interval of the phone length distribution. If the duration of the distinct phone lays in the outside of the respective confidence interval, this distinct phone is marked as being erroneous in step 55. On the other hand, if the duration of the distinct phone falls within said confidence interval, it is marked as being accepted or as being okay in step 56.

In the recognition step 50 from a representing signal RS - in that particular case represented by a time dependent spectrum - distinct phones or speech elements are recognized and their durations d1 and d2 are extracted from the time evolution of the time dependent spectrum of the representing signal RS. In step 51 the actual durations d1 and d2 are extracted from the spectrum of the representing signal RS.

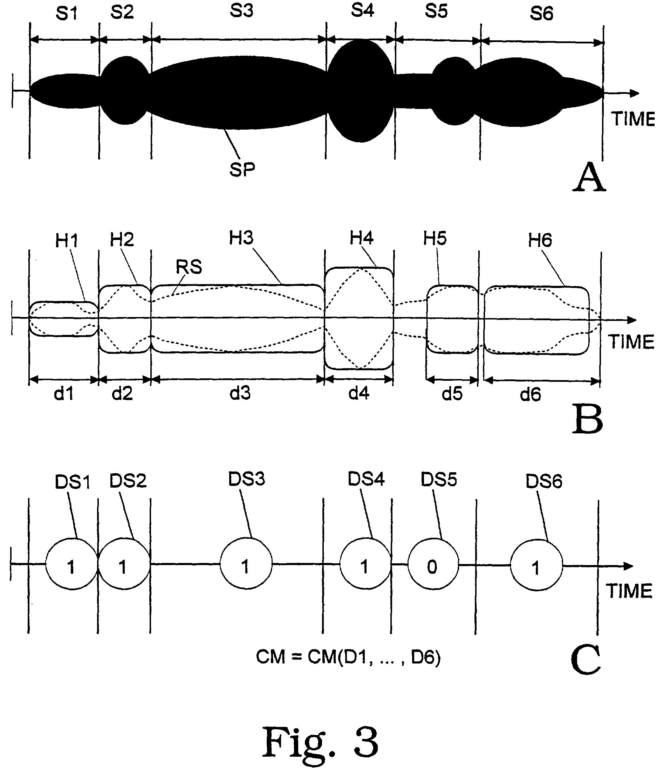

In Fig. 3 results of intermediate steps A to C of a recognizing process are shown.

Section A of Fig. 3 shows in a schematical way as a time-dependent sound amplitude an utterance or speech phrase SP which is formed by a sequence of speech elements S1 to S6.

Section B shows the time evolution of the representing signal RS. Also in section 3B speech elements H1 to H6 are included as hypotheses for being representative for the respective actual or correct speech elements S1 to S6. In the time evolution of the representing signal RS, also the durations d1 to d6 of the respective speech elements H1 to H6 are indicated.

In section C it is demonstrated that for each duration d1 to d6 a distinct duration measure DS1 to DS6 is assigned. The duration measures DS1 to DS6 depend on the statistical evaluation of the training data. In that particular case of Fig. 3C, the duration measures DS1 to DS6 are binary signals having a value 1, if the duration d1 to d6 of respective speech elements H1 to H6 is contained within a confidence interval of the statistical duration distribution of the respective actual speech elements or phone S1 to S6. If the durations d1 to d6 lay outside the respective confidence interval, the respective duration measure DS1 to DS6 obtain the value 0. As a result, the confidence measure CM is calculated or determined as a function at least of the duration measures DS1 to DS6.

In the example of Fig. 3, duration d5 for phone H5 is too short, therefore H5 is not the correct transcription of S5. DS5 has the value 0 and therefore indicates that H5 has to be rejected.

**Claims**

1. Method for recognizing speech,

   - wherein a received utterance/speech phrase (U) is subjected to a recognition process so as to generate a recognized utterance (W) as a recognition result and
   - wherein at least one confidence measure (CM) is generated for said recognized utterance (W) or for parts thereof being a measure for the reliability of the recognition result,

   **characterized in that**

   - a set (F) of a plurality of features ($f_j$) is derived from the recognition process and/or from said recognition result (W) with respect to said received utterance (U) and
   - generating said confidence measure (CM) is based on a combination of a plurality of features ($f_j$) chosen from said set (F) of features ($f_j$).

2. Method for recognizing speech according to claim 1, wherein duration related features are used in said combination of features (fj) for generating said confidence measure (CM).

3. Method for recognizing speech according to claim 2, wherein each of said duration related features is in each case chosen from the following set of possible features:

   - a number (n_toolongX) of durations (di) of speech elements in a recognized utterance (W) being longer than

a X-percentile ($\eta_x$) compared to a set of training data, i.e.:

$$n\_toolongX := \left\| \bigwedge_{d_i \in W} d_i \geq F(\eta_X) \right\| \tag{1}$$

where F is a known distribution,

- a normalized number (n_toolongX_norm) of durations ($d_i$) of speech elements in a recognized utterance (W) being longer than a X-percentile ($\eta_x$) compared to a set of training data being normalized by a speaking rate ($\alpha$), i.e.:

$$n\_toolongX\_norm := \left\| \bigwedge_{d_i \in W} d_i/\alpha \geq F_\alpha(\eta_X) \right\| \tag{2}$$

- a number (n_tooshortX) of durations (di) of speech elements in a recognized utterance (W) being shorter than a X-percentile ($\eta_x$) compared to a set of training data, i.e.:

$$n\_tooshortX := \left\| \bigwedge_{d_i \in W} d_i < F(\eta_X) \right\| \tag{3}$$

where F is a known distribution,

- a normalized number (n_tooshortX_norm) of durations ($d_i$) of speech elements in a recognized utterance (W) being shorter than a X-percentile ($\eta_x$) compared to a set of training data being normalized by a speaking rate (tempo, $\alpha$), i.e.

$$n\_tooshortX\_norm := \left\| \bigwedge_{d_i \in W} d_i/\alpha < F_\alpha(\eta_X) \right\| \tag{4}$$

- a number (sequence_long, sequence_short) of too long/too short speech elements in said utterance (U, W) followed by too short/too long speech elements in said utterance (U, W),
- an average speaking rate ($\alpha_{avg}$, avg_temp) being in particular evaluated only on utterances (U, W) with high confidence,
- an standard deviation (stdev_tempo) of the speaking rate ($\alpha$), in particular with respect to said average speaking rate ($\alpha_{avg}$, avg_temp) for a given number (N) of last utterances (U, W),
- an absolute difference (diff_tempo) between said average speeking rate ($\alpha_{avg}$, avg_temp) and said current speaking rate ($\alpha$), i.e.:

$$diff\_tempo := \alpha_{avg} - \alpha,$$

- a current speaking rate (tempo, $\alpha$),

or the like.

4. Method for recognizing speech according to anyone of the preceding claims,
   wherein additional or non-duration related features are used in said combination of features ($f_j$) for generating said confidence measure (CM).

5. Method for recognizing speech according to claim 4,
   wherein each of said additional or non-duration related features is in each case chosen from the following set of possible features:

- a feature direction (feature_direction), which is defined to be 1 if a best word, speechelement or the like is found in a forward beam and which is defined to be 0 if it is found in the backward beam,
- a total number (T, n_frames) of frames being contained in the utterance (U, W),
- a total number (P, n_phones) of phones , speech elements or the like being contained in the utterance (U, W),
- a total number ($T_{nosil}$, n_frames_nosil) of frames being contained in the utterance (U, W) without silence,
- an acoustic score (first_score) for a first-best hypothesis ($W_1$), i.e.:

$$\text{first\_score} := p(W_1|A) = \sum_{t=1}^{T} b(o_t)\, a_{ij} \qquad (14)$$

- a difference (first_second) in acoustic scores (first_score, second_score) between first- ($W_1$) and second-best hypotheses ($W_2$), i.e.:

$$\text{first\_second} := p(W_1|A) - p(W_2|A),$$

- a normalized difference (first_second_l) in acoustic scores (first_score, second_score) between first- ($W_1$) and second-best hypotheses ($W_2$) being normalized by the number (T) of frames being contained in said utterance (U, W), i.e.:

$$\text{first\_second\_l} := \text{first\_second} / T ,$$

- a normalized difference (first_second_f) in acoustic scores (first_score, second_score) between first- ($W_1$) and second-best hypotheses ($W_2$) being normalized by an acoustic score (first_score) for a first-best hypothesis ($W_1$), i.e.:

$$\text{first\_second\_f} := \text{first\_second} / \text{first\_score} ,$$

- an average acoustic score (avg) for N-best hypotheses ($W_1$, ..., $W_N$), i.e.:

$$\text{avg} := 1/N \sum_{i=1}^{N} p_i(W_i|A) \qquad (18)$$

- a normalized average acoustic score (avg_l) for N-best hypotheses ($W_1$, ... , $W_N$) being normalized by a number (T) of frames being conteined in said utterance (U, W), i.e.:

$$\text{avg\_l} := \text{avg} / T$$

- a normalized average acoustic score (avg_f) for N-best hypotheses ($W_1$, ... , $W_N$) being normalized by an acoustic score (first_score) for the first-best hypothesis ($W_1$), i.e.:

$$\text{avg\_f} := \text{avg} / \text{first\_score} ,$$

- a difference (first_avg) between an acoustic score (first_score) for a first-best hypothesis ($W_1$) and an average acosutic score (avg), i.e.:

$$\text{first\_avg} := p(W_1|A) - 1/N \sum_{i=1}^{N} p_i(W_i|A) \qquad (21)$$

- a normalized difference (first_avg_l) between an acoustic score (first_score) for a first-best hypothesis (W1) and an average acosutic score (avg) being normalized by a number (T) of frames being contained in said utterance (U, W), i.e.:

$$\text{first\_avg\_l} := \text{first\_avg} / T ,$$

- a normalized difference (first_avg_f) between an acoustic score (first_score) for a first-best hypothesis ($W_1$) and an average acosutic score (avg) being normalized by said acoustic score (first_score) for said first-best hypothesis ($W_1$). i.e.:

$$\text{first\_avg\_f} := \text{first\_avg} / \text{first\_score} ,$$

- a difference (first_last) between acoustic scores (first_score, last_score) for a first-best hypothesis ($W_1$) and for a last-best hypothesis ($W_N$), i.e.:

$$\text{first\_last} := \text{first\_score} - \text{last\_score} = p(W_1|A) - p(W_N|A),$$

- a normalized difference (first_last_1) between acoustic scores (first_score, last_score) for a first-best hypothesis ($W_1$) and for a last-best hypothesis ($W_N$) being normalized by a number (T) of frames being contained in said utterance (U, W), i.e.:

$$\text{first\_last\_l} := \text{first\_last} / T ,$$

- a normalized difference (first_last_f) between acoustic scores (first_score, last_score) for a first-best hypothesis ($W_1$) and for a last-best hypothesis ($W_N$) being normalized by said acoustic score (first_score) for said first-best hypothesis ($W_1$), i.e.:

$$\text{first\_last\_f} := \text{first\_last} / \text{first\_score} ,$$

- a normalized score difference (first_beambest) for all frames being contained in said utterance(U, W) being normalized by the number ($T_{nosil}$) of frames being contained in said utterance (U, W) without silence, i.e.:

$$\text{first\_beambest} := 1/T_{nosil} \sum_{t=1}^{T} \left( [\min_{s_t \in \text{beam}} b_{s_t}(o_t)] - [b(o_{OSS_t})] \right) \quad (27)$$

where $o_t$ in each case is a features vector for the $t^{th}$ frame in the utterance (U, W) with t running from 1 to T, b in each case is a Gaussian probability density function (pbdf) and $o_{OSS_t}$ denotes a feature vector for the $t^{th}$ frame in the utterance (U, W) found for the a state belonging to an optimal state sequence (OSS),
- a number (first_beambest_zeros) of frames being contained in said utterance (U, W) for which a score difference

$$[\min_{s_t \in \text{beam}} b_{s_t}(o_t)] - [b(o_{OSS_t})] = 0 \quad (28)$$

is zero,
- a largest continuous difference (first_beambest_largest) in said normalized score difference (first_beambest),
- a best possible score in a beam, i.e.:

$$best := \sum_{t=1}^{T} \min_{s_t \in beam} b_{s_t}(o_t) \qquad (30)$$

- a score difference (first_best) for all frames being contained in said utterance(U, W) taking into account respective transition probabilities (aij), i.e.:

$$first\_best := \sum_{t=1}^{T} \left( [\min_{s_t \in beam} b_{s_t}(o_t) a_{i,s_t}] - [b(o_{OSS_t}) a_{i,OSS_t}] \right) \qquad (31)$$

where $o_t$ in each case is a features vector for the $t^{th}$ frame in the utterance (U, W) with t running from 1 to T, b in each case is a Gaussian probability density function (pbdf) and $o_{osst}$ denotes a feature vector for the $t^{th}$ frame in the utterance (U, W) found for the a state belonging to an optimal state sequence (OSS),

- a worst phone score (worst_phonescore) in the first-best hypothesis ($W_1$) except for silence, i.e.:

$$worst\_phonescore := \max_{p \in W_t} p_{phone} \qquad (32)$$

- a normalized worst phone score (worst_phonescore_b) in the first-best hypothesis ($W_1$) except for silence being normalized by a best possible phone score ($p_{best}$) in a beam, i.e.:

$$worst\_phonescore\_b := worst\_phonescore / p_{best},$$

where

$$p_{best} := \sum_{d_t} [\min_{beam} p_{i,t}] \qquad (33a)$$

- an average phone score (avg_phonescore) in the best hypothesis, except for silence, i.e.:

$$avg\_phonescore := 1/P \sum_{i=1}^{P} p_{i,phone} \qquad (34)$$

- a change (stdev_phonescore) of a score within one phone, i.e.:

$$stdev\_phonescore := 1/T \left( \sum_{t \in phone} (p_{phone,t} - p_{phone,avg})^2 \right)^{1/2} \qquad (35)$$

- a difference (worst_phone_best) between a best possible phone score ($p_{best}$) and a worst phone score (worst_phonescore) for a best hypothesis, i.e.:

$$worst\_phone\_best := p_{best} - worst\_phonescore$$

- a worst frame score (worst_frame_score) for all frames in a best hypothesis ($W_1$), i.e.:

$$\text{worst\_frame\_score} := \max_{t \in W_1} p_{frame} \qquad (37)$$

- a normalized worst frame score (worst_frame_score_b) for all frames in a best hypothesis ($W_1$) being normalized by a best possible frome score ($p_{t,best}$) in a beam, i.e.:

$$\text{worst\_frame\_score\_b} := \text{worst\_frame\_score} / p_{t,best},$$

where

$$p_{t,best} := [\min_{beam} p_t] \qquad (38a)$$

- a sum (best_in_beam) of the differences between best frame scores for the hypotheses in the beam and for the best hypothesis, i.e.:

$$\text{best\_in\_beam} := \sum [\min_{beam} p_{frame,t}] - p_{frame,OSS} \qquad (39)$$

- a normalized sum (best_in_beam_l) of the differences between best frame scores for the hypotheses in the beam and for the best hypothesis being normalized by a number (T) of frames being contained in said utterance (U, W), i.e.:

$$\text{best\_in\_beam\_l} := \text{best\_in\_beam} / T$$

- an average acoustic score (avg_framescore) for all frames in a best hypothesis, except for silence, i.e.:

$$\text{avg\_framescore} := 1/T \sum_{i=1,nosil}^{T} \text{first\_score} \qquad (41)$$

- a signal-to-noise ratio (snr), particularly computed on $C_0$,

or the like.

6. Method for recognizing speech according to anyone of the preceding claims, wherein at least one classifier or the like is employed for selecting features out of the set of possible features for said combination of features.

7. Method for recognizing speech according to claim 6, wherein neural network based classifier is employed.

8. Method for recognizing speech according to claim 6 or 7, wherein by the classifier duration related features and/or non-duration related features are combined.

9. Method for recognizing speech according to anyone of the preceding claims, wherein further the following steps are comprised:

a) receiving a speech phrase (SP),
b) generating a representing signal (RS) which is representative for said speech phrase (SP),
c) determining from said representing signal (RS) at least a first sequence of speech elements (H1, ..., H6) out of a set of given possible speech elements (S1, ..., Sn, ...),
d) generating for each speech elements (H1, ..., H6), and/or for subsets/sub-sequences of said speech elements (H1, ..., H6) a duration measure (DS1, ..., DS6) in particular for constructing said duration related fea-

tures (f$_j$),

**e)** generating and/or outputting at least a first sequence of words from said speech elements (H1, ..., H6) which most probably correspond to said speech phrase (SP), and

**f)** generating and/or outputting a confidence measure (CM) which is at least based on said duration measures (DS1, ..., DS6) and/or on said duration related features (f$_j$) and which is representative for the probability of a correct recognition of said speech elements (H1, ..., H6) and/or said sequence of words,

wherein each of said duration measures (DS1, ..., DS6) comprises information at least on whether or not said speech elements (H1, ..., H6), said and/or sub-sets/sub-sequences of speech elements (H1, ..., H6) within said representing signal of (RS) are compatible to a given and pre-defined duration model.

**10.** Method according to claim 1, **characterized in that** phones, phonemes, syllables, words, and/or sequences thereof are used as speech elements (H1, ..., H6).

**11.** Method according to any of the preceding claims, **characterized in that** prior to recognition the duration model is constructed by recognizing given and pre-defined speech phrases as training data.

**12.** Method according to any of the preceding claims, **characterized in that** prior to recognition the statistical distribution of the duration for each of said possible speech elements (S1, ..., Sn, ...) and/or sequences thereof is determined and/or analyzed, and that said analysis is included into said duration model.

**13.** Method according to claim 4, **characterized in that** said determination of the statistical distributions of the durations is based on a forced time alignment process of said training data.

**14.** Method according to any of the claims 4 or 5, **characterized in that** during the determination of the statistical distribution of the durations the training data are provided as an input speech signal together with the correct transcription thereof and that then the recognizing process is forced recognize the correct transcription.

**15.** Method according to any of the claims 4 to 6, **characterized in that** during the determination of the statistical distributions of the durations the boundaries of the correct speech elements within said training data are determined and then used to estimate the durations of the respective speech elements.

**16.** Method according to any of the preceding claims, **characterized in that** for generating said duration measures (DS1, ..., DS6) statistical parameters of said speech elements (H1, ..., H6) and/or sub-sets/sub-sequences of speech elements (H1, ..., H6) with respect to their duration distributions are calculated and/or employed.

**17.** Method according to any of the preceding claims, **characterized in that** the duration measures (DS1, ..., DS6) are set to a first predetermined value, if - and only if - the duration of the speech elements (H1, ..., H6) and/or of sub-sets/sub-sequences of speech elements (H1, ..., H6), is contained in a given and pre-defined percentile interval of the respective duration distribution, and that they are set to a second predetermined value otherwise.

**18.** Method according to any of the preceeding claims, **characterized in that** the generation of the confidence measure (CM) employs the quantities of percentiles and/or percentile durations of the respective speech elements (H1, ..., H6), the number of speech elements in a word, the number and the durations of sequences of speech elements being too short and/or too long, the absolute durations of speech elements, probabilities of speech element durations, variances and averages thereof and/or the like.

**19.** Method according to any of the preceding claims, **characterized in that** during the determination of the speech elements (H1, ..., H6) and/or of the sub-sets/sub-sequences of speech elements (H1, ..., H6) the determined duration is corrected and/or normalized with respect to a speaking rate of the received speech phrase (SP).

**20.** Method according to any of the preceding claims, **characterized in that** each of said speech elements (H1, ..., H6) and/or each of said sub-sets/ sub-sequences of speech elements (H1, ..., H6) is classified as being rejected, if their respective duration measures (DS1, ..., DS6) indicate a lack of compatibility.

**21.** Method according to any of the preceding claims, **characterized in that** said sequence of words is classified as being rejected, if said confidence measure (CM) indicates that the number of speech elements (H1, ..., H6) and/or of said sub-sets/sub-sequences of speech elements (H1, ..., H6) being not compatible with said duration model exceeds a given threshold number.

## Learning Phase

```
        21
   ( Speech L )

        22            21a
  ┌──────────────┐  ┌──────────────┐
  │ Recognition  │◄─│   Concept    │
  │  L → W       │  │ Transcription│
  └──────────────┘  └──────────────┘

        23
  ┌──────────────┐
  │ Time-align-  │
  │ ment of Trai-│
  │  ning Data   │
  └──────────────┘

        24
  ┌──────────────┐
  │ Computation  │
  │ of features fj│
  └──────────────┘

        25
  ┌──────────────┐
  │Statistics over│
  │ features fj  │
  └──────────────┘
```

## Recognition Phase

```
        11
   ( Speech U )

        12
  ┌──────────────┐
  │ Recognition  │
  │  U → W       │
  └──────────────┘

        13
  ┌──────────────┐
  │ Time-align-  │
  │  ment of     │
  │ Recognition  │
  │  Results     │
  └──────────────┘

        14
  ┌──────────────┐
  │ Computation  │
  │ of features fj│
  └──────────────┘
```

20

10

40

```
        ⬡ Application of
          a Set of Rules
          / Classifiers
   30

        31
      ◇ Confidence
        Measure CM

  ┌──────────────┐        ┌──────────────┐
  │ Recognition  │   32   │ Recognition  │
  │  Result W    │   33   │  Result W    │
  │  rejected    │        │  accepted    │
  └──────────────┘        └──────────────┘
```

1

# Fig. 1

*Result of training*

*Result of recognition*

50

RS

@.hist

N.hist

53

d2: duration of phone "@"

d1: duration of phone "n"

51
*Measured duration*

*Distributions of phone durations*

54

52

*Does the measured duration of a given phone lie within a confidence interval of phone length distribution?*

*No*

*Yes*

55
*Mark phone as erroneous*

56
*Mark phone as "OK"*

Fig. 2

Fig. 3

**European Patent Office**

**EUROPEAN SEARCH REPORT**

Application Number

EP 00 12 0394

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MYOUNG-WAN KOO ET AL: "A new decoder based on a generalized confidence score" INTERNATIONAL CONFERENCE ON ACOUSTICS, SPEECH, AND SIGNAL PROCESSING,XX,XX, vol. 1, 1998, pages 213-216, XP002123828 * the whole document * | 1-6, 8-16, 19-21 | G10L15/02 |
| A | ANASTASAKOS A ET AL: "Duration modeling in large vocabulary speech recognition" INTERNATIONAL CONFERENCE ON ACOUSTICS, SPEECH, AND SIGNAL PROCESSING,XX,XX, vol. 1, 9 May 1995 (1995-05-09), pages 628-631, XP002123829 * the whole document * | 1-3, 9-16,20, 21 | |
| A | US 5 857 173 A (BEARD ET AL) 5 January 1999 (1999-01-05) * abstract; figures 3,5 * | 1-3 | |
| E | EP 1 067 512 A (SONY INTERNAT EUROP GMBH) 10 January 2001 (2001-01-10)  * the whole document * | 1-5, 9-17, 19-21 | **TECHNICAL FIELDS SEARCHED (Int.Cl.7)** G10L |

The present search report has been drawn up for all claims

| Place of search | Date of completion of the search | Examiner |
|---|---|---|
| THE HAGUE | 1 February 2001 | Quélavoine, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 12 0394

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2001

| Patent document cited in search report | | Publication date | Patent family member(s) | | Publication date |
|---|---|---|---|---|---|
| US 5857173 | A | 05-01-1999 | CN | 1191354 A | 26-08-1998 |
| | | | JP | 10222190 A | 21-08-1998 |
| EP 1067512 | A | 10-01-2001 | NONE | | |

EPO FORM P0459